# EUROPEAN PATENT SPECIFICATION

(11) **EP 1 224 357 B1**
(45) Date of publication and mention of the grant of the patent: **10.01.2007**
(21) Application number: 00969694.9
(22) Date of filing: 19.10.2000
(51) Int. Cl.: E01C 11/26, F28D 20/00

(54) **HEAT STORAGE SYSTEM**
WÄRMESPEICHERANLAGE
SYSTEME DE STOCKAGE THERMIQUE

(30) Priority: 19.10.1999 GB 9924752
(43) Date of publication of application: 24.07.2002
(73) Proprietor: Hewitt, Mark Geoffrey, London EC1Y 0SH (GB); Ford, Andrew John, Teddington, Middlesex TW11 0QQ (GB)
(72) Inventor: Hewitt, Mark Geoffrey, London EC1Y 0SH (GB); Ford, Andrew John, Teddington, Middlesex TW11 0QQ (GB)
(74) Representative: Vleck, Jan Montagu
(86) International application number: PCT/GB2000/004040
(87) International publication number: WO 2001/029320

(56) References cited:
- DE-A- 3 407 927
- US-A- 5 233 801

## Description

The present invention is concerned with a system for absorbing, storing and dispensing heat.

Preferred embodiments of the present invention are particularly useful for reducing the amount of ice and snow on transport surfaces, through harnessing, storing and channelling solar energy.

Nations which are exposed to seasonal climatic conditions which include periods of snow cover and freezing on the ground are obliged to spend large amounts of money every year to keep their transport infrastructure operational during the cold season. Finland, for example, spent just under £6000 per km (approximately $14,500 per mile) on winter maintenance for its highway network in 1994.

This outlay is a permanent additional infrastructure cost which such nations naturally are seeking to minimise. These costs are made up of direct capital outlay, in the form of purchasing, equipping, staffing and maintaining a fleet of vehicles for combatting the snow and ice. Supply costs for grit, salt and other maintenance materials are also an annual outlay.

There are, in addition, secondary costs which accrue as a direct result of snow and ice control activities. These include increased wear and tear on carriageway surfaces, which result in more frequent repair and renovation. The water table is also affected, being subject to contamination by salt and other chemicals used on the surface.

Human costs of adverse carriageway conditions are also significant; increased accident rates, death and injury. Attendant on this is damage to property and vehicles, and the resultant outlay and insurance costs, hospitalisation, and loss of work time, involving suffering and expense.

US-A-4,305,681 describes a method for controlling the temperature of asphalt and concrete bodies such as runways. The ground below the runway is used as a heat store and heat is transferred between the ground and the runway via liquid running in oblique channels drilled into the ground below the runway.

The method of US-A-4,305,681 stores heat deep below the runway in the ground below the runway and requires the drilling of oblique channels as well as the use of a complex series of valves and pumps to transfer heat to and from the stores. The method of US-A-4,305,681 is therefore expensive to implement, difficult to control and prone to failure.

DE 34 07 927 teaches a heat store for use in a roadway. The heat store is in communication with an overlying heat collecting surface. No insulation is provided above the heat store and so heat is not efficiently retained.

DE 34 07 927 discloses an arrangement for heating and/or cooling a layer made, in particular, from bituminous materials comprising a heat collecting and/or emitting surface and a heat storage medium in thermal communication with the heat collecting and emitting surface arrangement including a sensor located in the heat collecting and/or emitting surface for sensing an atmospheric condition, a controllable heat transfer mechanism coupling the heat storage medium and the heat collecting and/or emitting surface, and control means coupled to the sensor for actuating the controllable heat transfer mechanism.

The invention in the various aspects is defined in independent claims 1, 8 and 10 to which reference should now be made. Preferred features of the invention are set out in the dependent claims.

The inventors of the present invention have appreciated that it is possible to relatively easily and cheaply create a heat store for a transport route by storing heat at a shallow depth close to the transport route below a layer of insulating material arranged alongside the transport route. The inventors were the first to realise that it is not necessary to store heat at a great depth or have complicated heat transfer mechanisms if one uses the ground alongside the transport route as a heat store and insulates this from the atmosphere.

In a possible embodiment of the invention, the ground underneath the transport route as well as that alongside is used as a heat store. The harnessing and storing of solar energy occurs naturally as a result of the normal physical process of heat transfer.

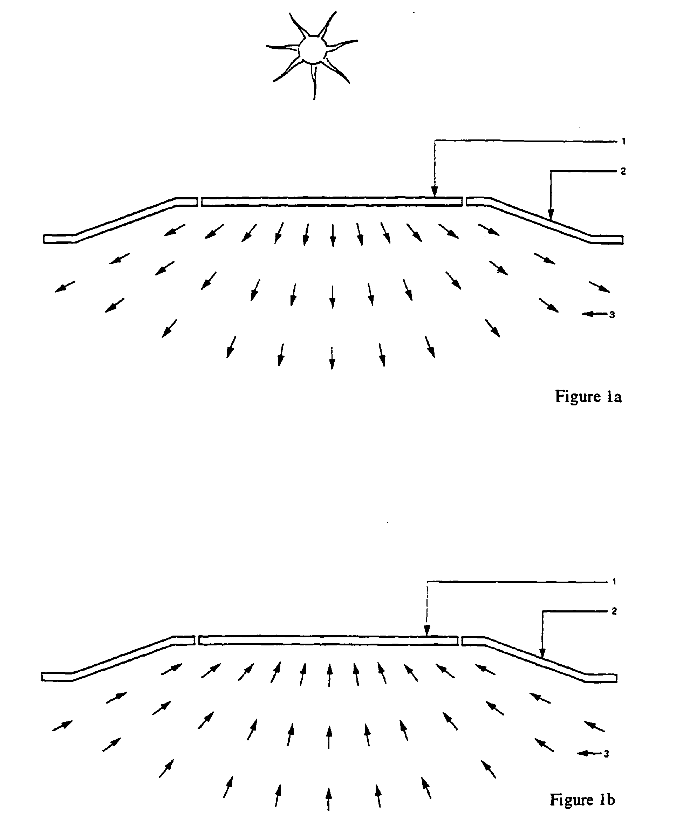

The present invention enhances the natural harnessing of solar energy by introducing a layer of insulation 2 on a surface adjacent to a carriageway 1 (Figure 1), thereby preventing heat energy from escaping to the sides, and focussing the conductive heat loss from the heat store formed by the ground through the surface of the carriageway. This maximises the surface temperature of the carriageway during cold periods, thereby reducing the likelihood of snow accumulation and freezing occurring on the carriageway surface.

Incoming solar radiation is collected on the surface of a carriageway, for example the surface of a road. Surfaces such as tarmacadam are relatively good conductors, and already perform well as collectors of solar energy. This energy is stored in the ground under the insulation, using the existing thermal capacity of the earth or rock, which is relative high. The energy, in the form of heat, is transferred to the ground or store from the surface during the summer (warm) season, and then returns to the surface during the winter (cold) season. These transfers are the result of thermal effects described by the laws of thermodynamics.

The invention takes advantage of these effects by placing a layer of insulation adjacent to the carriageway, thereby preventing loss of heat from these areas. The stored heat energy is conducted to the surface and thereafter radiated from the surface of the carriageway, which reduces the amount of freezing and snow accumulating on this surface. This concentration of heat energy in the critical areas of the carriageway through the location of the insulating layer therefore maximises the benefits of snow and ice control on the carriageway.

The precise extent and nature of the insulation layer will be locally specific, dependent on the particular climate conditions pertaining, and the most appropriate materials available.

Embodiments of the invention help to improve the condition of the carriageway during the cold season, without damage to the environment or the need for constant expenditure. This clearly offers significant benefits.

The invention includes a sensor located in the heat collecting and/or emitting surface for sensing an atmospheric condition, a controllable heat transfer mechanism coupling the heat storage medium and the heat collecting and/or emitting surface, and control means coupled to the sensor for activating the controllable heat transfer mechanism. This arrangement allows one to optimise or improve the heat transfer process thereby reducing wastage of heat and helping to ensure heat is provided to the transport route when it is most required.

The invention provides for heat collection, transfer and storage.

Heat collection; using the existing or enhanced emissivity of the heat collecting and emitting surface, the invention collects, say, incoming solar energy.

Heat transfer; heat energy derived from the collected heat is transferred to the appropriate location at the appropriate time by conduction through the material below and adjacent to the heat collecting and emitting surface. This may, in a preferred embodiment of the invention, be enhanced by the installation of a regular series of pumpstations which circulate liquid through the heat collecting surface at times when the temperature of the heat collecting and emitting surface exceeds the temperature of the heatstore. The arrangement of these pipes crosses the heat collecting surface and the heatstores.

The pipes increase the efficiency of the heat collection and the efficiency of heat transfer to and from the heat store or stores. At times of potential icing and/or snow accumulation the liquid in the pipes will transfer heat from the heatstore back to the heat collecting and emitting surface. The surface then functions as a heat emitter in order to maintain a positive temperature at the surface.

Heat storage; by insulating the ground adjacent to the heat collecting and emitting surface an inter-seasonal heatstore can be created in the area close to the surface. The depth of the effective heat store will vary according to the physical characteristics of the local ground but may, typically, be around six metres.

Preferred embodiments of the invention will now be described with reference to the attached figures in which:
**Figures 1a and 1b** are schematic illustrations of heat flows in summer and winter respectively in a preferred embodiment of the invention;
Figure 2 illustrates an embodiment of the present invention being retrofitted to an existing carriageway;
Figures 3a and 3b illustrate the embodiment of figure 2 in more detail;
Figure 4 illustrates a second embodiment of the present invention;
Figure 5a and 5b illustrate a third embodiment of the present invention;
Figure 6 illustrates a conventional carriageway maintenance programme; and
Figure 7 is a schematic top plan view of an embodiment of the invention incorporating a heat transfer mechanism for transferring heat from an underground body;
Figure 8a and 8b are schematic sectional and top plan views of an embodiment of the invention incorporating a heat transfer mechanism for increasing the efficiency of heat transfer between a transport route and the ground;
Figures 9a, 9b and 9c are schematic views of, respectively, a cross-section through, a top plan view and a longitudinal section along an alternative embodiment of the invention.
Figures 10 and 11 illustrate alternative heat transfer systems for use with embodiments of the present invention.

Referring to Figure 1, insulation 2 is placed on the ground 3 alongside a carriageway or transport route 1. The ground can then act as a heat store. The arrows of figures 1a and 1b show the direction of heat flow in hot and cool environmental or atmospheric periods respectively. Since heat energy is typically conducted through ground at very approximately 1 metre per month, the ground 3 adjacent to the heat collecting and emitting surface formed by the carriageway will be receiving heat energy for some of the year's cycle, and giving it up for the remainder. It is this annual cycle which is the basic characteristic which dictates the configuration of the heat storage to heat collector relationship between the ground 3 and the carriageway or transport route 1. In this application the expressions carriageway or transport route mean any route over which people or vehicles are intended to pass. The expressions carriageway or transport route therefore encompass paths, pavements, roads, runways and railway lines.

The placing of the insulation 2 is designed to maximise the potential of the storage area to each side as well as below the collector surface formed by the transport route.

The insulation is placed on or near the surface of the verges or areas to the side of the road or carriageway.

Embodiments of the invention seek to maximise rather than negate the heat energy that can be drawn from the ground adjacent to the surface of the transport route. The inventors have appreciated that the natural annual pattern of heat flow both below and to the sides of the surface of a transport route describes a cycle which is desirable: "collecting" heat during the surplus (summer) period and delivering this back to the surface of the transport route during the "deficit" (winter) period.

Embodiments of the invention focus the heat loss in cold periods to the road or transport route surface 1 in order to keep it snow and ice free; this loss of heat to the surface is integral to the working of the invention.

The surface insulation 2 results in the creation of a heat store from the ground 3 under the insulation. The optimum size of the insulated area is proportioned to the area of the collector (i.e. the transport route or carriageway) and should be equal to or greater than the collector area. For a typical road, an insulation layer extending two to eight metres on each side of the carriageway is therefore desirable. For a larger transport route such as a runway, the insulation would extend over a larger area; perhaps up to 20 metres on each side of the runway.

Six metres of earth typically create a time delay on heat flow of around six months which means that a seasonal system matching the weather seasons is created with such a width of earth covered to each side of the transport route 1 by insulating material 2. Providing an additional metre (seven rather than six) of insulation as each side will help to ensure that heat losses to the surface at the edge of the ground heat store are reduced. This may significantly improve the efficiency of the system.

The exact amount of insulation material required will depend on the thermal properties of the ground at a particular location and the length of the cold and hot periods to which the road is liable to be subjected. The insulation should be sufficiently wide to define a heat store capable of storing enough heat to last through the cold spell or period and capable of being heated during the hot spell or period. The rate of conduction through the ground below the surface is typically about one metre per month. In such conditions, a six metre width of insulation would create a heat store which would heat up over a six month hot period and cool down and thereby dispense heat over a six month cold period.

During the "surplus" heat period (for ease of reference we shall call it "summer" in this patent application) the transfer of heat is to the ground immediately adjacent to the surface, and during the "deficit" period (winter) the heat returns to the surface. The placing of the insulation is designed to direct and focus this transfer; In the "surplus" period the energy is transferred from the collector formed by the surface 1 to the store, and in the "deficit" period the stored heat is conducted back to the surface but only through the area of the transport route.

The invention is designed to be applicable both to retrofit and new build carriageways. It is appropriate to many transport infrastructure situations, including roadways, railways and airport runways. It is also appropriate for cycle paths and pedestrian pathways. The precise configuration and extent of the application will vary in different applications and locations. The amount and thickness of the insulating cover 2 will be dependent on the following variables:
1) the amount of incoming solar radiation;
2) other local climatic factors such as wind speeds and air temperature;
3) the transmittance characteristics of the collecting surface of the transport route; and
4) the specific local availability of insulating materials;

The dimensions and characteristics of the insulating material 2 are selected using the following analysis step:
1. Identify from suitable meteorological data the quantity of solar energy falling on the ground in a typical year for the chosen location.
2. Investigate the effect of local shading, air temperature, wind and precipitation on the place chosen to implement the system.
3. Apply suitable factors to reduce energy available to store as a result of these.
4. Calculate the total energy needed to melt the snow and ice that would normally form on the surface again from knowledge of meteorological data for location and the heat of evaporation of water.
5. Calculate the energy flow needed to maintain the chosen size of surface to be maintained free of falling snow and ice and above freezing point on the surface in the design conditions.
6. The rate of flow of heat from the surface required will be the summation of the heat losses, radiative, conductive, convective and change of state for the design rate of precipitation.
7. Multiply rate by time required.
8. Compare total heat available with total heat needs and derive required 'storage efficiency'.
9. An efficient store must minimise heat loss by all routes so the insulation layer must also prevent rain draining through.
10. The surface insulation efficiency in Watts/metre² must as a minimum be capable of maintaining the store at the annual average temperature of the location to ensure heat losses downwards are eliminated. This temperature is usually reached at a depth of about 6m of earth so to a first approximation it should be equivalent to this depth of earth.

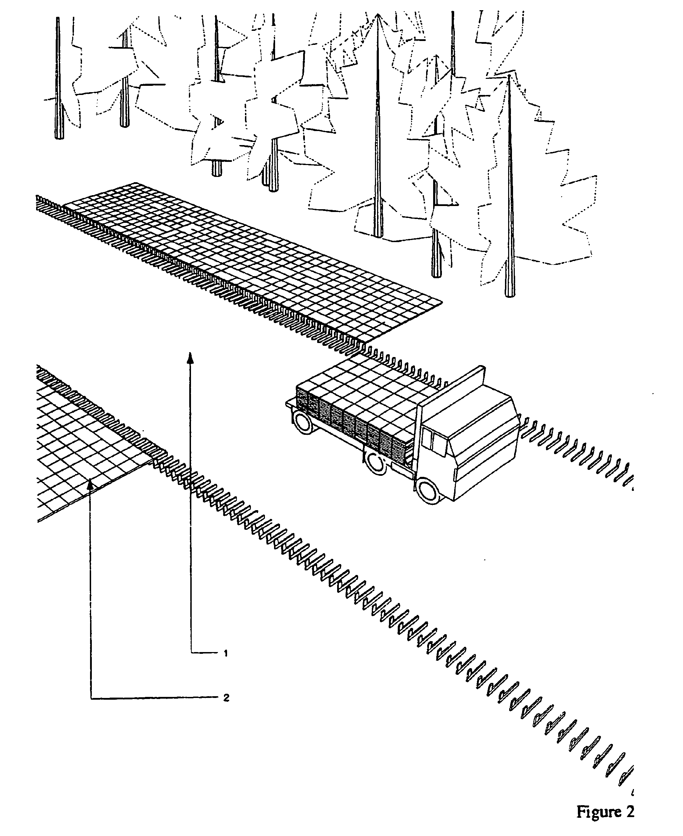

In Figure 2 an embodiment of the invention is shown being applied as a retrofit to an existing road carriageway:

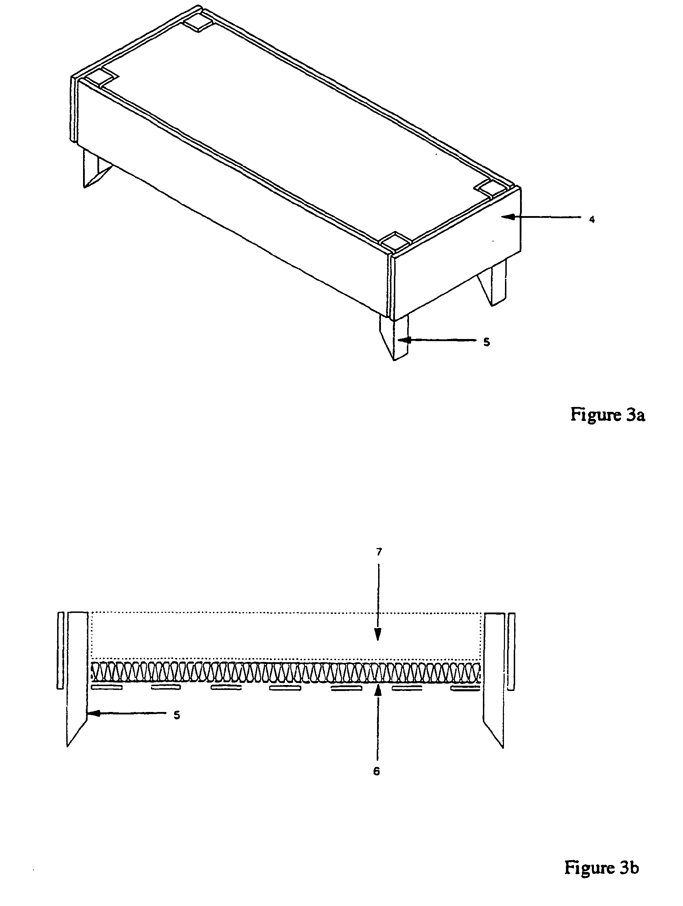

The insulating layer 2 supplied in this case is an easily transported and handled modular form. Boxes 4 (see Figure 3) are constructed from a robust and cheap material (eg. compressed cardboard or wood) which will degrade eventually in the ground. The boxes will generally have location protrusions 5, like pegs, in the corners, to ensure their stability on inclined surfaces. They are designed to allow easy stacking for delivery to site. These boxes contain insulating material 6 in the appropriate thickness, which are held together in mesh bags. The boxes are deep enough to contain the insulation and allow an appropriate thickness of a surface or covering medium 7, (e.g. case earth with grass seed).

It can be seen that this manifestation of the invention allows a very fast and efficient application; the layer of insulation can be applied to the existing surface with minimal preparation, and features such as trees can be accommodated easily. It is envisaged that this will be a common configuration for retrofit on existing carriageways since grass verges are universally the most common edge condition.

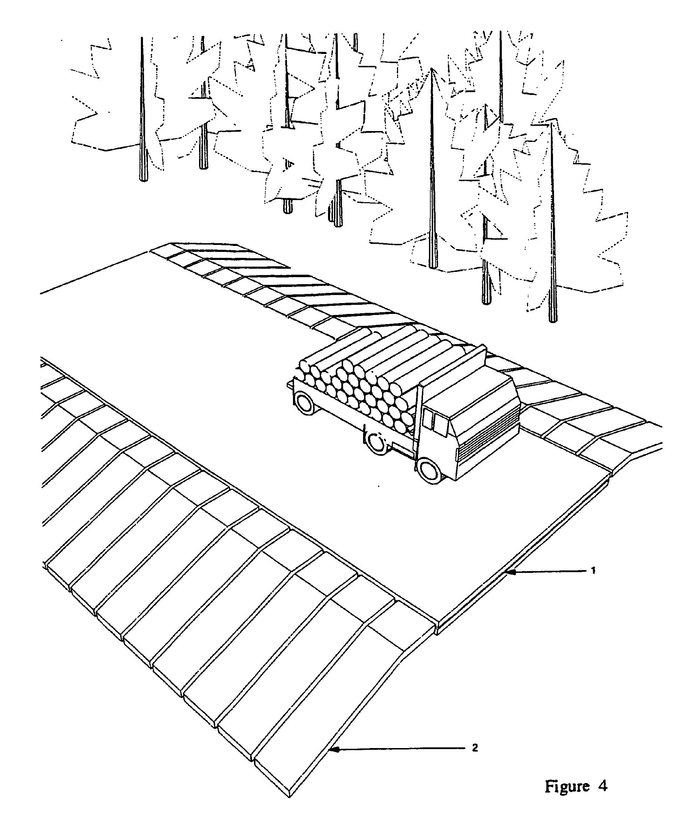

In the second embodiment (see Figure 4, it is envisaged that it may sometimes be easier to lay the insulating layer 2 in strip or roll form as part of the build up of the verge. In this case the insulating layer is laid under the verge build up.

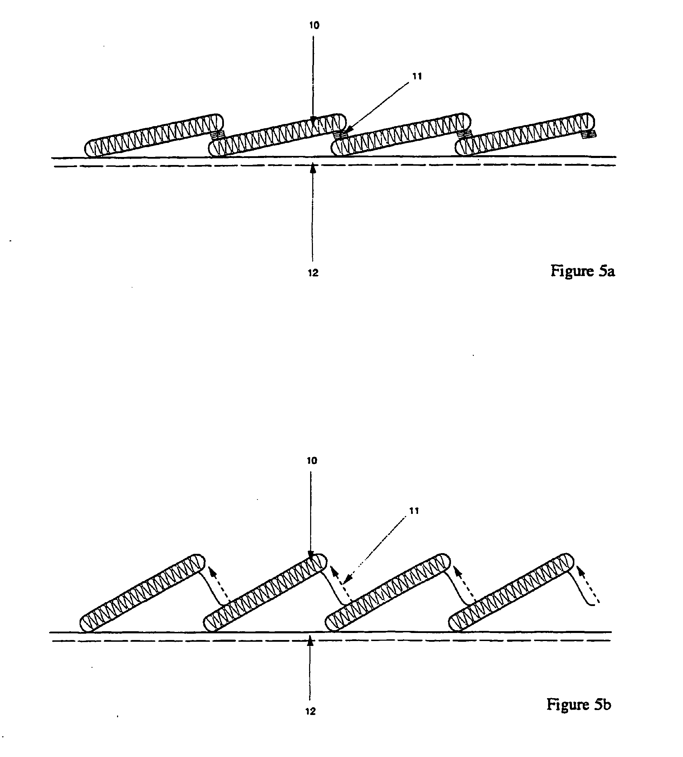

Figures 5a and 5b show a third embodiment of the invention. The insulating layer is made up of a number of insulating elements 10 with a first end resting on the ground, and the other resting on a foldable or extensible support 11 which has its lower end resting on another insulating element 10. The foldable or extensible support 11 allows one to position the insulating element in either an open (Figure 5b) or closed (Figure 5a) configuration.

With the supports extended, the insulating layer has gaps through which solar energy can be radiated to the ground surface 12 during a warm period. With the support folded, the insulating layer has no gaps and its insulation properties are therefore maximised. In this embodiment the amount of solar energy available to the heat store can therefore be increased by collection through the insulating layer during hot or warm periods.

In the three embodiments of figures 3 to 5, the installation is characterised by:
a) easy application involving a small departure from existing methods or materials; and
b) a small outlay on material costs, involving the specification of the cheapest appropriate insulating material.
Environmental benefits of the embodiments of figures 3 to 5 include:
a) reduced reliance on salt and other chemical surface treatments resulting in less damage to the water table; and
b) reduced demand for snow and ice control vehicles, resulting in lower capital outlay, maintenance, fuel and material supply costs.

Reduced wear and tear on carriageway surfaces will also result in less frequent repair and renovation. There will therefore be significant benefits to the local environment, and reduced fuel consumption with its attendant release of pollutants.

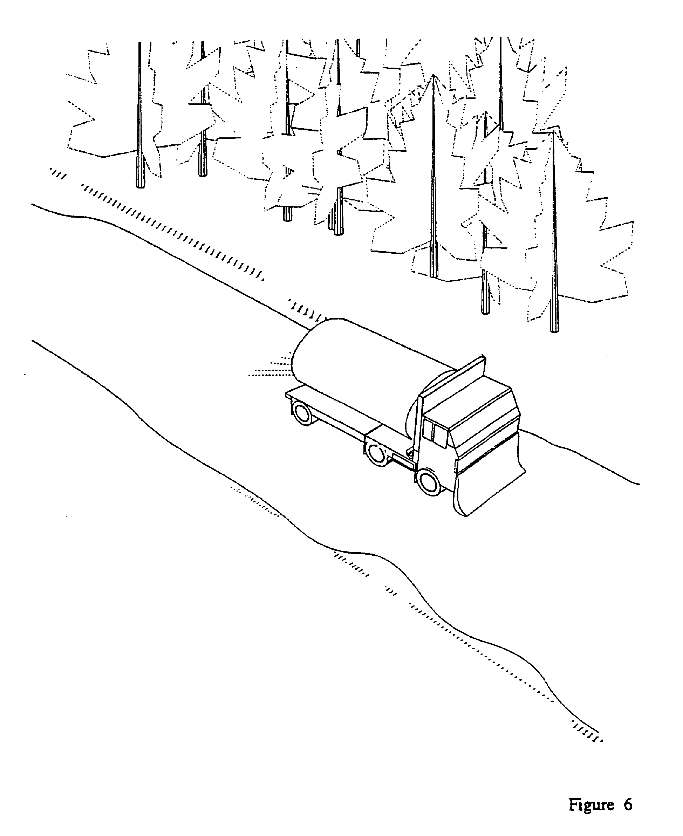

It is particularly worth noting that all nations which need to maintain a snow and ice control programme grade carriageway maintenance in relation to transport priority. The invention will have great benefit to smaller and more minor carriageways which may presently receive minimal snow and ice control (see figure 6 showing conventional salting, gritting, ploughing etc) thereby rendering such carriageways significantly more traffic able and safe. In cases where carriageways receive virtually no or minimal snow and ice control (particularly in more rural areas) the benefits to the local community would be significant.

In some locations the performance of the invention may be enhanced by increasing the amount of energy collected and stored by the invention and/or increasing the efficiency of heat transfer between the transport route surface and the heat store. The following methods may be employed:

Heat collection at the surface of the road from incoming solar radiation may be enhanced by the use of surface treatment to the tarmac to improve emissivity.

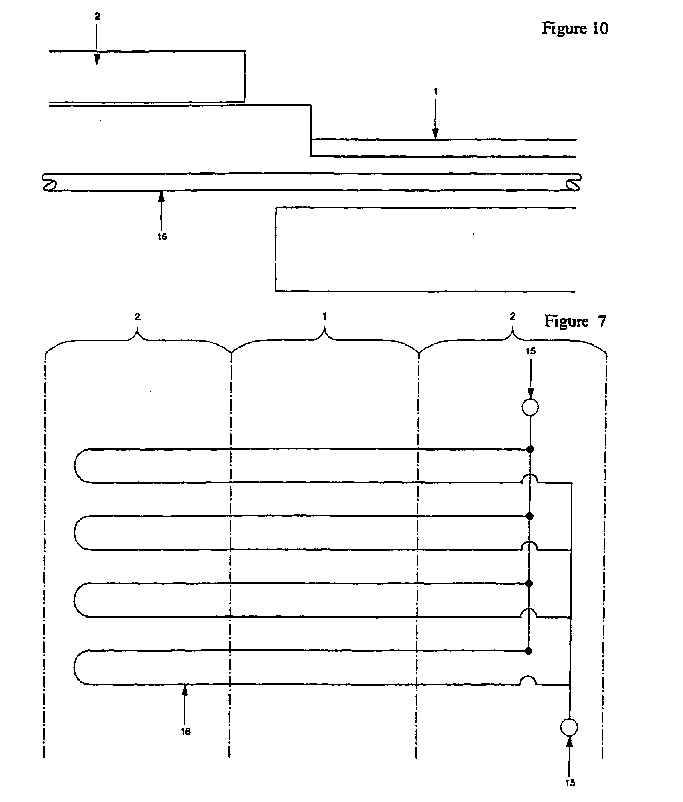

Alternatively, or in addition, the use of bore holes 15 would be employed to access a body of water with a temperature of the annual mean for that latitude. Figure 7 is a schematic top plan view of a transport route 1 with insulation 2 alongside it and a mechanism for supplementing heat stored in the rock or soil with heat transferred from an underground body of water.

The bore holes 15 are sunk at intervals along the length of the carriageway 1, and liquid is circulated in a system of pipes 16 set just below the surface of the transport route and insulation. The circulating liquid is returned to the bore holes 15. The circulating water is used to top-up the effect of the heat collected by the transport route or road surface 1 and stored in the ground under the insulation 2.

The heat transfer mechanism of figure 7 can be used just to supply heat from an underground heat source such as an aquifer or other underground heat source, (e.g. geothermal heat source) or to transfer heat both between the route surface and an underground body of water in both directions (to and from the aquifer or body of water).

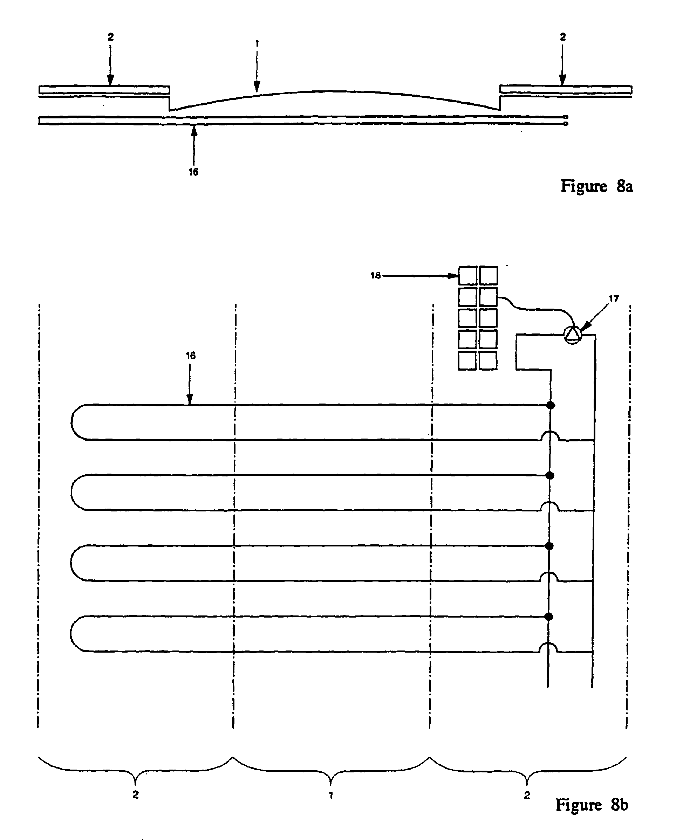

In some situations the summertime solar energy may need to be delivered to the heat store in greater quantities and/or quicker than is possible by conducting through the rock or soil on which the route is built and the insulating material 2 laid. The technique proposed is to use direct conduction through the sub-surface of the route to the heatstore, using a system of regular pumpstations 17 which circulate liquid through the route 1 at times when the temperature here exceeds the temperature in the heatstore (see figures 8a and 8b).

The arrangement of the pipes 16 crosses the carriageway to the heatstore. During periods when there is a potential for icing or snow collection on the surface of the road, the circulating system will be used to transfer heat from the heatstore to the surface of the carriageway in order to maintain a positive surface temperature. As with the embodiment of figure 7, the circulation system of figures 8a and 8b serves to top-up and/or improve the collection, storage and dispensing of the sun's energy.

The pipework 16 is laid out in loops along the length of the road. This allows heat to be collected and dispersed over a large area evening out variations in temperature resulting from local shading and other environmental conditions.

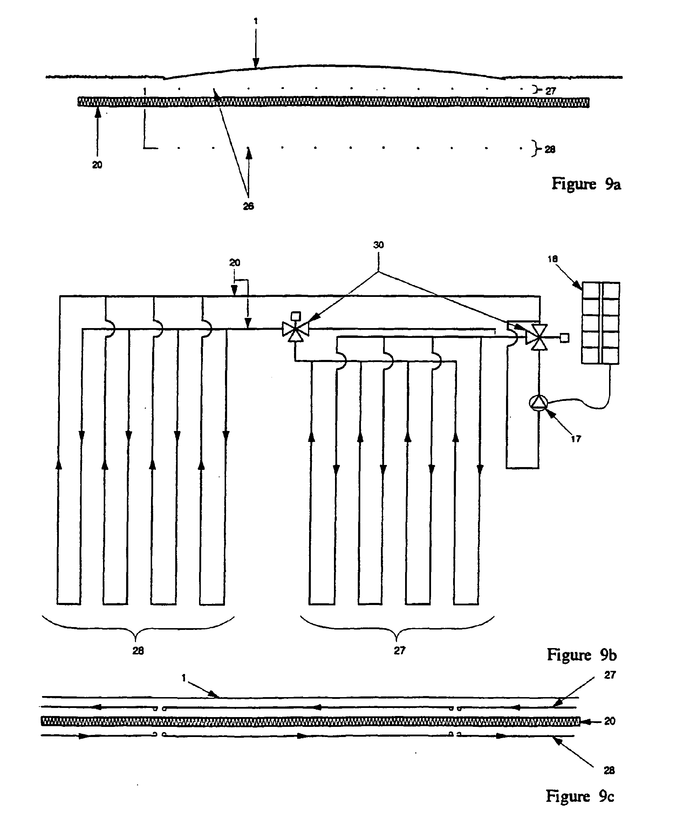

In a further alternative embodiment (see figures 9a to 9c), the insulating material 20 extends underneath and alongside the carriageway 1.

A network of pipes 26 is configured in two layers. A surface layer or collector/emitting array 27 being intended to control the emission and collection of heat through the road surface and a lower layer or storage array 28 being a heat storage control layer.

The pipework in the upper surface of the road 1 runs in longitudinal loops extending across the entire width. The pipes of the surface layer are attached to a header 29. A pump 17, preferably powered by photovoltaic collectors 18 in summer links this layer 27 to another similar array of pipework forming the storage array 28 at a depth of between 1 and 3 metres. 3-way motorised values 30 are used to control the flow of fluid (or heat carrying medium)through and around the system.

As the sun falls on the road surface and its temperature rises above the temperature of the ground at the lower level the pump 17 is activated and transfers heat from the surface layer 27 to the lower storage layer 28. This is repeated on all occasions this condition is met.

The insulation layer 20 is placed below the top layer 27 of pipework and extends the whole width of the road surface and beyond to typically between 2 and 8 metres depending on the size of store required. The insulation is placed beneath the verges at a sufficient depth to allow the appropriate verge build up.

The inter-annual fluctuations in the deep earth temperature are thereby optimised to allow heat energy to be available for control of snow and ice at the surface.

The collection of heat and pumping would take place whenever the route surface temperature exceeds the heat store temperature . When this temperature is not exceeded then the storage or lower layer of pipes would run alone to equal out any variations in temperature in the ground or heat store.

The operation of the surface loop in winter will be confined to situations where the route surface temperature is below zero and the wet bulb (temperature by a saturated thermometer) temperature indicates precipitation or ice formation is occurring.

The insulation layer 20 within the ground is used to control the direction and rate of heat flow to optimise the location and availability of the area of maximum temperature during the winter months.

The systems of figures 8a, 8b and 9a to 9c include a photovoltaic array, battery and sensor 18 to control the temperature of the carriageway or collector to prevent ice and snow formation.

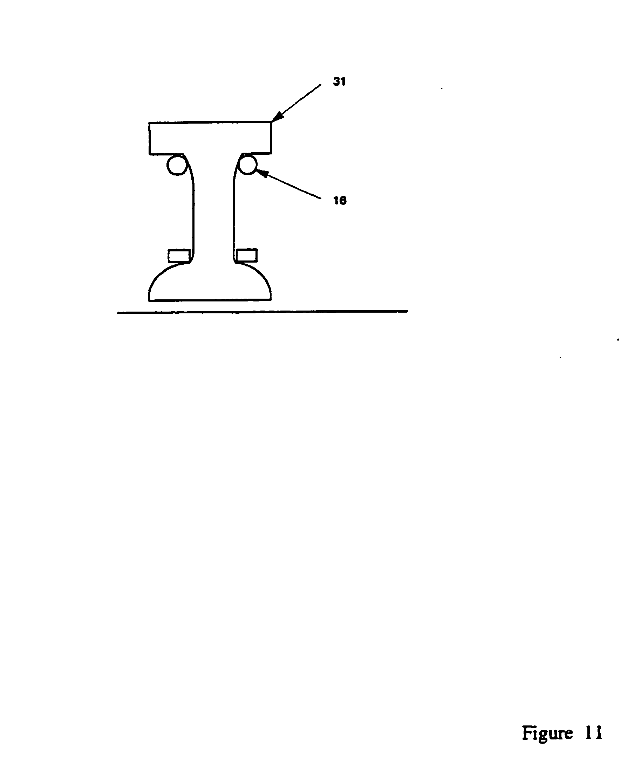

The installation of the pipe circulation systems can be made at the time of construction, or as a retrofit to existing carriageways. The placing of the pipes just below the surface would make this system particularly appropriate for retrofit to carriageways during resurfacing work (see figure 10) or as an attachment to existing railway lines 31 (see figure 11).

Preferred embodiments of the invention include the capability to control the transfer of heat in the embodiments of figures 7 to 11 which include heat transfer mechanisms. Sensors giving information about the temperatures in the system and in the external environment are used to predict optimum rates of heat transfer to and from the heat store or ground, and optimum periods of transfer.

The activation of pumping or other systems to direct the heat transfer is based on this sensor-derived data. By using a model of the behaviour of the transport route and ground during different environmental conditions, the system can be constantly updated and optimised. This allows, for example, minimisation of plant for heat transfer, and minimisation of the energy used in running this plant, ensuring efficiency.

In carriageway situations such control has particular advantages. Currently the prediction of optimum snow and ice control activities (for example when to send out gritters and ploughs) is a highly complex problem, and there is inevitable wastage of resources and time when weather patterns do not conform to predictions. In this invention the sensor control allows activation on demand, thereby reducing the problem of having to predict weather conditions. All carriageways to which the invention has been applied can be activated independently as required. This obviates the current difficulties which maintenance crews have in prioritising routes for clearance in severe conditions: in theory all routes which include the invention can be cleared simultaneously.

The control system utilises the predictive ability of the modelling system modified by the measured temperatures at the control station.

The basic arrangement of collector and insulation, with enhancing devices where necessary, has other potential applications. In particular, this arrangement would be suitable for providing a basic "warm ground" in cold climates for placing buildings in. In principal the ground of an urban zone would be treated as a thermal block, and collector surfaces would be either the carriageway as described above, or the buildings themselves. In the case that the buildings were used, the pipe system as described in figures 2, 8a and 8b would be placed on collecting surfaces, such as the roof or appropriate walls of a building.

## Claims

1. A system for the alteration of the temperature of a heat storage medium (3), comprising a heat collecting and/or emitting surface (1), an insulating material (2) extending alongside the heat collecting and/or emitting surface (1), and a heat storage medium (3) arranged under the insulating material (2) and in thermal communication with the heat collecting and/or emitting surface (1), the system including a sensor (18) located in the heat collecting and/or emitting surface (1) for sensing an atmospheric condition, a controllable heat transfer mechanism (16) coupling the heat storage medium (3) and the heat collecting and/or emitting surface (1), and control means coupled to the sensor (18) for actuating the controllable heat transfer mechanism (16).

2. A system according to claim 1 wherein the insulating material (2) extends alongside and beneath the heat collecting and/or emitting surface (1).

3. A system according to claim 1 or claim 2 wherein the heat collecting and/or emitting surface (1) is a transport route such as a path, road, railway line or runway.

4. A system according to claim 1 or claim 2 wherein the heat collecting and/or emitting surface (1) is a surface on a building or structure.

5. A system according to any preceding claim wherein the heat storage medium (3) is soil and/or rock.

6. A system according to claim 1 wherein the sensor (18) is a temperature, wind, precipitation or humidity sensor.

7. A system according to claim 1 or claim 6 wherein the controllable heat transfer mechanism (16) is a network of pipes containing a heat transfer medium and located below the heat collecting and/or emitting surface (1) and insulation material (2).

8. A transport route comprising a carriageway (1) having a heat emissive surface in thermal communication with the soil and/or rock (3) surrounding the carriageway (1) and a layer of insulating material (2) arranged alongside the carriageway (1) and over the soil and/or rock (3) whereby heat loss directly to the atmosphere from the soil and/or rock (3) surrounding the carriageway (1) is reduced, the transport route including a sensor (18) located in the carriageway (1) for sensing an atmospheric condition, a controllable heat transfer mechanism (16) coupling the carriageway (1) and the soil and/or rock (3) surrounding the carriageway (1), and a control coupled to the sensor (18) for actuating the controllable heat transfer mechanism (16).

9. A transport route according to claim 8 wherein the insulating material (2) is arranged alongside and beneath the carriageway.

10. A method of making a system for alteration of the temperature of a heat storage medium (3) comprising the steps of providing a heat-storage medium (3), placing a heat collecting and/or emitting surface (1) on the heat storage medium (3), placing insulating material (2) on the heat storage medium (3) alongside the heat collecting and/or emitting surface (1); and providing a controllable heat transfer mechanism (16) coupling the heat storage medium (3) and the heat collecting and/or emitting surface (1) and located below the surface of the heat collecting and/or emitting surface (1) and the insulating material (2).

11. A method according to claim 10 wherein the insulating material (2) is placed alongside and beneath the heat collecting and/or emitting surface (1).

12. A method according to claim 10 or claim 11 wherein the heat collecting and/or emitting surface (1) is the surface of a transport route.

13. A method according to claims 10 to 12 wherein the heat storage medium (3) is soil and/or rock.

14. A method according to any of claims 10 to 13 wherein the controllable heat transfer mechanism (16) is a pipe or conduit containing a fluid material and passing under the heat collecting and/or emitting surface (1) and the insulating material (2).

15. A method according to any of claims 10 to 14 including providing a sensor (18) for sensing an atmospheric condition, the sensor output controlling the actuation of the controllable heat transfer mechanism (16).

## Patentansprüche

1. System zum Ändern der Temperatur eines Wärmespeichermediums (3), das Folgendes umfasst: eine Wärmeaufnahme- und/oder -abgabefläche (1), ein Isoliermaterial (2), das entlang der Wärmeaufnahme- und/oder -abgabefläche (1) verläuft, und ein Wärmespeichermedium (3), das unter dem Isoliermaterial (2) und in Wärmeverbindung mit der Wärmeaufnahme- und/oder -abgabefläche (1) angeordnet ist, wobei das System einen Sensor (18) aufweist, der in der Wärmeaufnahme- und/oder -abgabefläche (1) vorgesehen ist, um eine atmosphärische Bedingung zu erfassen, wobei ein steuerbarer Wärmeübertragungsmechanismus (16) das Wärmespeichermedium (3) und die Wärmeaufnahme- und/oder -abgabefläche (1) verbindet und wobei Steuermittel mit dem Sensor (18) gekoppelt sind, um den steuerbaren Wärmeübertragungsmechanismus (16) zu betätigen.

2. System nach Anspruch 1, bei dem das Isoliermaterial (2) entlang und unterhalb der Wärmeaufnahme- und/oder -abgabefläche (1) verläuft.

3. System nach Anspruch 1 oder Anspruch 2, wobei die Wärmeaufnahme- und/oder -abgabefläche (1) eine Verkehrsroute wie z.B. ein Weg, eine Straße, eine Eisenbahnlinie oder eine Start- und Landebahn ist.

4. System nach Anspruch 1 oder Anspruch 2, wobei die Wärmeaufnahme- und/oder -abgabefläche (1) eine Oberfläche an einem Gebäude oder einer Konstruktion ist.

5. System nach einem der vorherigen Ansprüche, wobei das Wärmespeichermedium (3) Erde und/oder Stein ist.

6. System nach Anspruch 1, wobei der Sensor (18) ein Temperatur-, Wind-, Niederschlags- oder Feuchtesensor ist.

7. System nach Anspruch 1 oder Anspruch 6, wobei der steuerbare Wärmeübertragungsmechanismus (16) ein Netzwerk von Rohren ist, die ein Wärmeübertragungsmedium enthalten und sich unterhalb der Wärmeaufnahme- und/oder -abgabefläche (1) und dem Isoliermaterial (2) befinden.

8. Verkehrsroute, die eine Fahrbahn (1) mit einer wärmeabstrahlenden Oberfläche in Wärmeverbindung mit der Erde und/oder dem Stein (3) um die Fahrbahn (1) herum und einer Schicht aus Isoliermaterial (2) aufweist, die entlang der Fahrbahn (1) und über der Erde und/oder dem Stein (3) angeordnet ist, so dass Wärmeverluste von der Erde und/oder dem Stein (3) um die Fahrbahn (1) herum direkt in die Atmosphäre reduziert werden, wobei die Verkehrsroute Folgendes aufweist: einen in der Fahrbahn (1) befindlichen Sensor (18) zum Erfassen einer atmosphärischen Bedingung, einen steuerbaren Wärmeübertragungsmechanismus (16), der die Fahrbahn (1) und die Erde und/oder den Stein (3) um die Fahrbahn (1) herum koppelt, und eine mit dem Sensor (18) gekoppelte Steuerung zum Betätigen des steuerbaren Wärmeübertragungsmechanismus (16).

9. Verkehrsroute nach Anspruch 8, wobei das Isoliermaterial (2) entlang und unterhalb der Fahrbahn angeordnet ist.

10. Verfahren zum Herstellen eines Systems zum Ändern der Temperatur eines Wärmespeichermediums (3), das die folgenden Schritte beinhaltet: Bereitstellen eines Wärmespeichermediums (3), Platzieren einer Wärmeaufnahmeund/oder -abgabefläche (1) auf dem Wärmespeichermedium (3), Platzieren von Isoliermaterial (2) auf dem Wärmespeichermedium (3) entlang der Wärmeaufnahme- und/oder -abgabefläche (1); und Bereitstellen eines steuerbaren Wärmeübertragungsmechanismus (16), der das Wärmespeichermedium (3) und die Wärmeaufnahme- und/oder -abgabefläche (1) koppelt und sich unterhalb der Oberfläche der Wärmeaufnahme- und/oder -abgabefläche (1) und dem Isoliermaterial (2) befindet.

11. Verfahren nach Anspruch 10, wobei das Isoliermaterial (2) entlang und unterhalb der Wärmeaufnahme- und/oder -abgabefläche (1) liegt.

12. Verfahren nach Anspruch 10 oder Anspruch 11, wobei die Wärmeaufnahme- und/oder -abgabefläche (1) die Oberfläche einer Verkehrsroute ist.

13. Verfahren nach den Ansprüchen 10 bis 12, wobei das Wärmespeichermedium (3) Erde und/oder Stein ist.

14. Verfahren nach einem der Ansprüche 10 bis 13, wobei der steuerbare Wärmeübertragungsmechanismus (16) ein Rohr- oder Kanal ist, das/der ein fluides Material enthält und unter der Wärmeaufnahme- und/oder -abgabefläche (1) und dem Isoliermaterial (2) passiert.

15. Verfahren nach einem der Ansprüche 10 bis 14, das das Bereitstellen eines Sensors (18) zum Erfassen einer atmosphärischen Bedingung beinhaltet, wobei der Sensorausgang die Betätigung des steuerbaren Wärmeübertragungsmechanismus (16) steuert.

## Revendications

1. Système d'altération de la température d'un milieu de stockage de chaleur (3), comprenant une surface de récupération et/ou d'émission de chaleur (1), un matériau isolant (2) s'étendant le long de la surface de récupération et/ou d'émission de chaleur (1), et un milieu de stockage de chaleur (3) disposé sous le matériau isolant (2) et en communication thermique avec la surface de récupération et/ou d'émission de chaleur (1), le système comprenant un capteur (18) situé dans la surface de récupération et/ou d'émission de chaleur (1) pour détecter une condition atmosphérique, un mécanisme contrôlable de transfert de chaleur (16) couplant le milieu de stockage de chaleur (3) et la surface de récupération et/ou d'émission de chaleur (1), et un moyen de commande couplé au capteur (18) pour actionner le mécanisme contrôlable de transfert de chaleur (16).

2. Système selon la revendication 1, dans lequel le matériau isolant (2) s'étend le long et sous la surface de récupération et/ou d'émission de chaleur (1).

3. Système selon la revendication 1 ou la revendication 2, dans lequel la surface de récupération et/ou d'émission de chaleur (1) est une voie de transport telle qu'un chemin, une route, une voie ferrée ou une piste d'envol et d'atterrissage.

4. Système selon la revendication 1 ou la revendication 2, dans lequel la surface de récupération et/ou d'émission de chaleur (1) est une surface sur un ouvrage ou une structure.

5. Système selon l'une quelconque des revendications précédentes, dans lequel le milieu de stockage de chaleur (3) est du sol ou de la roche.

6. Système selon la revendication 1, dans lequel le capteur (18) est un capteur de température, de vent, de précipitation ou d'humidité.

7. Système selon la revendication 1 ou la revendication 6, dans lequel le mécanisme contrôlable de transfert de chaleur (16) est un réseau de tuyaux contenant un milieu de transfert de chaleur et est situé sous la surface de récupération et/ou d'émission de chaleur (1) et le matériau isolant (2).

8. Voie de transport comprenant une chaussée (1) ayant une surface émettrice de chaleur en communication thermique avec le sol et/ou la roche (3) entourant la chaussée (1) et une couche de matériau isolant (2) disposée le long de la chaussée (1) et sur le sol et/ou la roche (3), en vertu de quoi la perte de chaleur directement dans l'atmosphère, provenant du sol et/ou de la roche (3) entourant la chaussée (1), est réduite, la voie de transport comprenant un capteur (18) situé dans la chaussée (1) pour détecter une condition atmosphérique, un mécanisme contrôlable de transfert de chaleur (16) couplant la chaussée (1) et le sol et/ou la roche (3) entourant la chaussée (1), et une commande couplée au capteur (18) pour actionner le mécanisme contrôlable de transfert de chaleur (16).

9. Voie de transport selon la revendication 8, dans laquelle le matériau isolant (2) est disposé le long de et sous la chaussée.

10. Méthode de fabrication d'un système d'altération de la température d'un milieu de stockage de chaleur (3), comprenant les étapes consistant à fournir un milieu de stockage de chaleur (3), à placer une surface de récupération et/ou d'émission de chaleur (1) sur le milieu de stockage de chaleur (3), à placer un matériau isolant (2) sur le milieu de stockage de chaleur (3) le long de la surface de récupération et/ou d'émission de chaleur (1); et à fournir un mécanisme contrôlable de transfert de chaleur (16) couplant le milieu de stockage de chaleur (3) et la surface de récupération et/ou d'émission de chaleur (1) et situé sous la surface de la surface de récupération et/ou d'émission de chaleur (1) et du matériau isolant (2).

11. Méthode selon la revendication 10, dans laquelle le matériau isolant (2) est placé le long de et sous la surface de récupération et/ou d'émission de chaleur (1).

12. Méthode selon la revendication 10 ou la revendication 11, dans laquelle la surface de récupération et/ou d'émission de chaleur (1) est la surface d'une voie de transport.

13. Méthode selon les revendications 10 à 12, dans laquelle le milieu de stockage de chaleur (3) est du sol et/ou de la roche.

14. Méthode selon l'une quelconque des revendications 10 à 13, dans laquelle le mécanisme contrôlable de transfert de chaleur (16), est un tuyau ou un conduit contenant une matière fluide et passant sous la surface de récupération et/ou d'émission de chaleur (1) et le matériau isolant (2).

15. Méthode selon l'une quelconque des revendications 10 à 14, comprenant fournir un capteur (18) pour détecter une condition atmosphérique, la sortie du capteur contrôlant l'actionnement du mécanisme contrôlable de transfert de chaleur (16)
